# EUROPEAN PATENT APPLICATION

(11) **EP 2 898 871 A1**
(43) Date of publication of application: **29.07.2015**
(21) Application number: 13849017.2
(22) Date of filing: 24.10.2013
(51) Int. Cl.: A61J 1/10, A61J 1/05

(54) **MEDICAL CONTAINER**

(30) Priority: 25.10.2012 JP 2012235366
(71) Applicant: Kyoraku Co., Ltd., Kyoto-shi, Kyoto 602-0912 (JP)
(72) Inventor: SANO, Takeru, Yamato-shi Kanagawa 242-0018 (JP); UCHIHASHI, Kentaro, Yamato-shi Kanagawa 242-0018 (JP)
(74) Representative: Andrae | Westendorp Patentanwälte Partnerschaft
(86) International application number: PCT/JP2013/078800
(87) International publication number: WO 2014/065359

(57) **Abstract**

[Problem]

To provide a medical container that has low medicine absorptivity, excellent transparency, high mechanical strength (rigidity) and high heat resistance, and that does not generate cloudiness, interfacial peeling and other inconvenience when subjected to the steam sterilization.

[Solution]

The medical container is formed by blow molding, and subjected to the steam sterilization. The medical container includes: an innermost layer made of a cyclic polyolefin resin; a gas barrier layer located at a position external to the innermost layer and made of an ethylene-vinyl alcohol copolymer resin or the like; and an adhesive layer jointing at least the gas barrier layer to the innermost layer. An adhesive used in the adhesive layer contains maleic anhydride modified polypropylene and styrene elastomer.

## Description

### TECHNICAL FIELD

This invention relates to a medical container to be filled with a variety of liquid medicines, in particular to an improvement of a medical container subjected to steam sterilization.

### BACKGROUND ART

An example of a medical container to be filled with a variety of liquid medicines is a blow molding bottle, a blow molding bag, and the like formed by blow molding of plastic. By blow molding, the container is efficiently manufacturable. In recent years, medical container known as vial has also been manufactured by blow molding technique.

However, as compared to a general container, the medical container is subject to severe requirements in terms of chemical resistance, oxygen transmission prevention property and other performances. In particular, the vial is required to not only exhibit the above performances, but also have transparency, mechanical strength, and the like. Thus, in order to meet such requirements, so-called multi-layered vial is also proposed. A variety of studies has been conducted on the plastic material for use in each layer and the layer structure.

For instance, one proposal proposes a container formed by laminating a layer made of polypropylene and a layer made of an ethylene-vinyl alcohol copolymer resin together via an adhesive layer and then by blow molding. However, if the container is formed to be thick enough to secure the strength to resist the pressing pressure applied from the above so as not to be crushed, the container may not be transparent enough. In addition, when the innermost layer is a polypropylene layer in the above described layer structure, attentions must be paid to the medicine absorptivity. When the polypropylene layer serves as the innermost layer of the container, the container adheres with the medicines contained in the liquid medicines filled in the container. Therefore, due to the reduction of titer or so, the medicine quality may be greatly deteriorated.

In view of the above background, it is considered that a cyclic polyolefin resin is used in place of the polypropylene from the perspectives of the medicine absorptivity, transparency and the like (see, for instance, Patent Literatures 1 and 2, and the like).

Patent Literature 1 discloses a sanitary product container (container for preserving medicines, foods and other sanitary product) made of a material containing a resin whose copolymer component is a cyclic olefin compound or crosslinked polycyclic hydrocarbon compound. Patent Literature 1 further discloses that a highly sanitary container that keeps the quality of the content stable for a long period and that can also pass the tests prescribed in the various official standards, can be provided.

On the other hand, Patent Literature 2 discloses a plastic ampoule that uses a polycyclic olefin exhibiting a glass transition temperature of 110°C or less on at least the inner wall surface side thereof. Patent Literature 2 further discloses that a laminated structure is formed. The structure includes a layer made of a polycyclic olefin exhibiting a glass transition temperature of 110°C or less and a layer containing polycyclic olefin exhibiting a glass transition temperature of more than 110°C. In addition, Patent Literature 2 discloses that a laminated structure is formed. The structure includes a layer made of a polycyclic olefin exhibiting a glass transition temperature of 110°C or less and a layer containing polyolefin. Patent Literature 2 also discloses that the above structure prevents vapor, gas, rays or medicines from being infiltrated into the ampoule or from being oozed out of the ampoule, and prevents medicines, liquid medicines, solvents, and the like contained in the ampoule from being adhering to or absorbed into the inner surface of the ampoule.

### CITATION LIST

### PATENT LITERATURE

PATENT LITERATURE 1: JP-A-05-293159
PATENT LITERATURE 2: JP-A-2012-135621

### SUMMARY OF THE INVENTION

### PROBLEMS TO BE SOLVED BY THE INVENTION

In consideration of the various characteristics required for the medical vial, it will be difficult for a blow molding container made of a cyclic polyolefin single layer to exhibit all such characteristics. For instance, in a cyclic polyolefin single layer, the gas barrier performance and the like may become insufficient. Accordingly, it is practical to employ a multi-layer structure in which a cyclic polyolefin resin layer and other resin layers are combined.

In such configuration, the selection of the resin layer to be combined with the cyclic polyolefin resin layer is the key as the matter of course. However, after various studies, the inventors have come to the conclusion that the adhesives for use in jointing the layers together need to be also improved.

Conventionally, an adhesive based on maleic anhydride modified polypropylene has been widely in use for jointing the layers of such multi-layered container. However, the direct application of such adhesive to the medical container will cause a variety of problems. More specifically, the medical container needs to experience heating operations such as steam sterilization. However, maleic anhydride modified polypropylene has a low melting point. Therefore, when the medical container is subjected to the steam sterilization, the transparency may be reduced due to cloudiness generated. Further, maleic anhydride modified polypropylene does not adhere to a cyclic olefin resin very well. Thus, if applied with a great impact, there may be an interfacial peeling in the adhesive layer, such that the container may not serve as the container.

This invention is proposed in view of the above background. More specifically, the object of this invention is to provide a medical container that has low medicine absorptivity, excellent transparency, high mechanical strength (rigidity) and high heat resistance, and that does not generate cloudiness, interfacial peeling and other inconvenience when subjected to the steam sterilization. Such medical container can satisfy the performance required in every respect.

### SOLUTIONS TO THE PROBLEMS

To achieve the above described object, a medical container formed by blow molding and subjected to steam sterilization according to the aspect of the invention, includes: an innermost layer made of a cyclic polyolefin resin; a gas barrier layer located at a position external to the innermost layer and made of a gas barrier resin; and an adhesive layer jointing at least the gas barrier layer to the innermost layer. An adhesive used in the adhesive layer contains maleic anhydride modified polypropylene and styrene elastomer.

The cyclic polyolefin resin in use in the innermost layer of the medical container according to the aspect of the invention exhibits low medicine absorptivity and high transparency. In addition, at least the gas barrier layer made of a gas barrier resin such as an ethylene-vinyl alcohol copolymer resin is layered externally onto the innermost layer. Thus, the gas barrier performance is also sufficiently secured.

On the other hand, the adhesive in use for jointing the layers together contains maleic anhydride modified polypropylene and styrene elastomer. By adding styrene elastomer to maleic anhydride modified polypropylene, the melting point is raised. Further, by such addition, the cloudiness is not generated at a temperature of the steam sterilization. In addition, the addition of styrene elastomer can mitigate the impact. The medical container does not cause an interfacial peeling or the like.

### EFFECTS OF THE INVENTION

The medical container according to the aspect of the invention can have low medicine absorptivity, excellent transparency and excellent mechanical strength (rigidity). The performance of the medical container is not deteriorated even after the steam sterilization. Further, the medical container according to the aspect of the invention that does not generate cloudiness, interfacial peeling and other inconvenience can be provided.

### BRIEF DESCRIPTION OF THE DRAWINGS

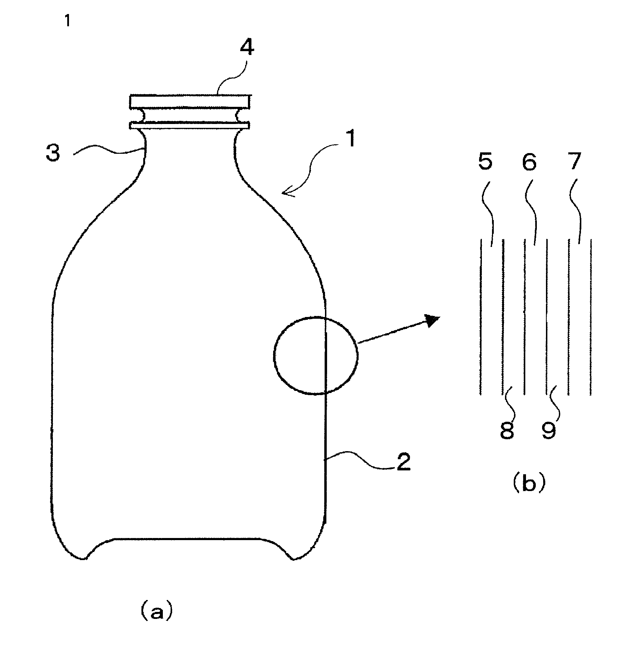

Fig. 1 depicts a medical container according to an embodiment of the invention, in which the view (a) is a front view of the medical container while the view (b) is a schematic cross sectional view depicting the layer structure in an enlarged manner.

### DESCRIPTION OF EMBODIMENTS

In the following description, embodiments of a medical container according to the aspect of the invention will be described in detail with reference to the attached drawings.

As depicted in Fig. 1(a), a medical container 1 of this embodiment includes a container body (trunk) 2 and a neck 3 provided to an upper portion of the container body 2. An upper end opening 4 of the neck 3 is attached with a lid such as a rubber plug when the medical container 1 is used as, for instance, a vial. The medical container 1 is formed by blow molding. In this embodiment, the container body 2 is shaped as a perfect circle. As a matter of course, the shape may be determined as needed. In accordance with the usages and the like, the container body 2 may be variously shaped. This invention is predicated on a medical container subjected to the steam sterilization. The medical container 1 of this embodiment is also subjected to the steam sterilization in the course of some process.

The medical container 1 of this invention has a characteristic layer structure. As depicted in Fig. 1(b), the layer structure is a three layer structure in which an innermost layer 5, a gas barrier layer 6 and an external layer 7 are layered on each other. In addition, the layers interpose adhesive layers 8 and 9 for use in jointing the layers together.

In the above laminated structure, the innermost layer 5 and the external layer 7 are formed of a cyclic polyolefin resin. The cyclic polyolefin resin exhibits low medicine absorptivity. By using the cyclic polyolefin resin as the innermost layer 5, the adhesion of the medicine contained in the liquid medicine filled in the medical container 1 can be minimized. Further, the cyclic polyolefin resin exhibits high transparency. Accordingly, by using the resin as the innermost layer 5 and the external layer 7, the entire medical container 1 can be made securely transparent.

The polymer component of the cyclic polyolefin resin for use in the innermost layer 5 and the external layer 7 contains at least a polymerizable cyclic olefin having an ethylene double bond in the cyclic structure. The cyclic olefin (i.e., the polymer component) may be a monocyclic olefin or a polycyclic olefin.

Any publicly-known cyclic olefin is usable in this invention. The representative examples thereof are norbornenes, cyclopentadienes, dicyclopentadienes, polycyclic olefin, and the like obtained by condensation of norbornenes and cyclopentadienes.

The cyclic polyolefin resin may be a single polymer made of a single type cyclic olefin, or may be a copolymer made of different types of cyclic polyolefins (for instance, a copolymer of a monocyclic olefin and a polycyclic olefin). Alternatively, the cyclic polyolefin may be a copolymer of a cyclic olefin and other co-polymerizable monomers. In such configuration, examples of the co-polymerizable monomers are a chain olefin such as ethylene and propylene, a (meta) acryl monomer, an unsaturated dicarboxylic acid (or a derivative thereof), a polymerizable nitryl compound, vinyl esters and conjugated dienes.

However, the cyclic polyolefin resin applied to the innermost layer 5 is preferably a homopolymer made only of cyclic polyolefin such as a single polymer made of a single type of cyclic olefm and a copolymer made of different types of cyclic polyolefin from the perspective of the low medicine absorptivity. A homopolymer of cyclic polyolefin exhibits low medicine absorptivity as compared to a copolymer of cyclic polyolefin and other co-polymerizable monomers. The homopolymer of cyclic polyolefin is also preferable in that the homopolymer exhibits favorable impact resistance.

The thicknesses of the innermost layer 5 and the external layer 7 are suitably determined in accordance with the usages and the like. For instance, the thicknesses may be set approximately 0.005 mm (5 µm) to 5 mm. Preferably, the thicknesses are approximately 0.03 mm to 3 mm.

On the other hand, the gas barrier layer 6 is made of a resin exhibiting high gas barrier performance. Examples of the gas barrier resin are an ethylene-vinyl alcohol copolymer resin, a polyamide resin and a saturated polyester resin. Among the above, an ethylene-vinyl alcohol copolymer resin is preferable. Any publicly-known ethylene-vinyl alcohol copolymer resin made of a saponified ethylene-vinyl acetate copolymer is usable. The preferable ethylene content of ethylene-vinyl alcohol copolymer resin is 20 to 70 mol%. The preferable saponification degree of vinyl acetate in the resin is 95 mol% or more. More preferably, the ethylene content is 25 to 50 mol%, and the saponification degree of vinyl acetate is 98 mol% or more.

When the saponification degree is low, the gas barrier performance may be reduced.

The ethylene-vinyl acetate copolymer resin may contain a third monomer component that is co-polymerizable with ethylene and the like. Examples of the co-polymerizable third monomer component are unsaturated acids such as α-olefin (e.g., propylene), acrylic acid, and methacrylic acid. The ratio of these co-polymerizable monomers is preferably 5 mol% or less.

When the gas barrier layer 6 is too thin, the gas barrier performance may become insufficient. Conversely, when the gas barrier layer 6 is too thick, the entire medical container 1 may have the deteriorated transparency. Accordingly, the thickness of the gas barrier layer 6 serving as the middle layer is preferably, for instance, approximately 0.003 mm (3 µm) to 1 mm.

Next, the adhesive for jointing the innermost layer 5 and the gas barrier layer 6 together or for jointing the gas barrier layer 6 and the external layer 7 together (i.e., the adhesive contained in the adhesive layers 8 and 9) is an adhesive whose main component is maleic anhydride modified polypropylene. Maleic anhydride modified polypropylene not only adheres well to the olefin material, but also has an excellent transparency.

However, when only maleic anhydride modified polypropylene is employed, the melting point is lowered. Therefore, when the medical container 1 is subjected to the steam sterilization, the medical container 1 may be clouded to lose the transparency in its entirety. In addition, when a great impact is applied, an interfacial peeling may be caused between the adhesive layers 8 and 9.

Hence, according to the medical container 1 of this embodiment, the maleic anhydride modified polypropylene is added with styrene elastomer, and then used as the adhesive therefor. With this configuration, the above problems are solved. By adding styrene elastomer to maleic anhydride modified polypropylene, the melting point is raised. Thus, even when the medical container 1 is subjected to the steam sterilization, the adhesive layers 8 and 9 are not clouded. Further, styrene elastomer serves as an impact absorber. Therefore, even when the medical container 1 is applied with a great impact, no interfacial peeling will be caused.

The added styrene elastomer includes a thermoplastic styrene terminal block and an elastic middle block. In other words, the elastomer contains a copolymer of a styrene monomer and an elastomer component. Examples of a styrene monomer are styrene and α-methyl styrene. Examples of an elastomer component are butadiene, isoprene, chloroprene and 1,3-pentadiene. Examples of a styrene elastomer are styrene-butadiene copolymer, styrene-isoprene copolymer and styrene-isoprene-butadiene copolymer. The styrene elastomer in use may be modified by maleic anhydrite.

In the adhesive for use in the adhesive layers 8 and 9, maleic anhydride modified polypropylene may be blended with a styrene elastomer at any ratio. However, when the ratio of a styrene elastomer becomes too high, the adhesive may not adhere to cyclic polyolefin very well. On the other hand, when the ratio of a styrene elastomer is too low, the effects obtained by the addition may be insufficient. In view of the above, the ratio of maleic anhydride modified polypropylene to styrene elastomer is preferably 0.5 : 99.5 to 50 : 50 (mass ratio).

In the medical container 1 configured as described above, the innermost layer 5 is made of a cyclic polyolefin resin exhibiting low medicine absorptivity. Therefore, the adhesion of the medicine is suppressed. Further, since the innermost layer 5 and the external layer 7 are made of a cyclic polyolefin resin, the medical container that has a high transparency can be obtained. On the other hand, according to the layer structure of the medical container, the gas barrier layer made of an ethylene-vinyl alcohol copolymer resin and the like is layered in addition to the above layers. Therefore, the gas barrier performance is also sufficiently secured.

In the medical container 1 according to this embodiment, the adhesive layers 8 and 9 use the adhesive obtained by adding a styrene elastomer to maleic anhydride modified polypropylene. Thus, even after the steam sterilization, cloudiness or interfacial peeling will not be caused. With the advantageous effects as described above, the medical container has low medicine absorptivity, excellent transparency, high mechanical strength (rigidity) and high heat resistance. Even when the steam sterilization is conducted, the medical container can be free from inconvenience such as cloudiness and interfacial peeling, and exhibit higher heat resistance.

Embodiments of the invention have been described above. However, needless to say, the invention is not limited to the embodiments described above. A variety of modifications or improvements may be made to the invention as long as such modifications or improvements do not depart from the spirit of the invention.

For instance, the medical container according the embodiment described above has a three layer structure of the innermost layer, the gas barrier layer and the external layer. However, the configuration is not limited thereto, and the layer structure may be a further multi-layered structure. Alternatively, the external layer may be omitted or be made of other resin materials.

### Examples

In the following description, the examples in which the invention is applied will be described with reference to the experiment results.

### Physical Property of Component Material

Table 1 sets out the physical properties (MFR, elastic modulus and melting point) of the various component materials for use in the innermost layer, the oxygen barrier layer, the external layer and the adhesive layer of Examples and Comparative Examples. Among the physical properties described above, the MFR (melt flow rate) was measured in accordance with JIS K 7210. The elastic modulus was measured in accordance with JIS K7161. The melting point was obtained by the DSC (differential scanning calorimetry). The total thickness of the manufactured container was 1 mm, and the thickness of each layer was 0.75 mm, 0.05 mm, 0.05 mm, 0.05 mm and 0.10 mm in the order from the external layer.

**[Table 1]**

| Used portion | Material | MFR (Measurement method) | Elastic Modulus (MPa) | Melting point (°C) |
|---|---|---|---|---|
| Innermost layer, External layer | polypropylene (pp) | 4 | 600 | 132 |
| | | (230°C, 2.16 kg) | | |
| | cyclic polyolefin (COP) | 17 | 2200 | 136 |
| | | (280°C, 2.16 kg) | | (Glass transition point) |
| | cyclic polyolefin (COC) | 0.9 | 2400 | 138 |
| | | (230°C, 2.16 kg) | | (Glass transition point) |
| | polyethylene terephthalate (PET) | 1.41 | 2300 | 233 |
| | | (250°C, 2.16 kg) | | |
| Adhesive layer | maleic anhydride modified polypropylene+ styrene monomer (adhesive A) | 3.49 | 17 | 157 |
| | | (230°C, 2.16 kg) | | |
| | maleic anhydride modified polypropylene (adhesive B) | 3.15 | 524 | 122 |
| | | (230°C, 2.16 kg) | | |
| Gas barrier layer | ethylene-vinyl alcohol copolymer resin (EVOH) | 9.26 | 2700 | 183 |
| | | (250°C, 2.16 kg) | | |

### Examples and Comparative Examples

### (Example 1)

The innermost layer was made of a cyclic polyolefin resin (COP), the gas barrier layer was made of an ethylene-vinyl alcohol copolymer resin (EVOH) and the external layer was made of a cyclic polyolefin resin (COP). These layers were jointed together by the adhesive (adhesive A) obtained by adding 20 parts by weight of styrene elastomer to 100 parts by weight of maleic anhydride modified polypropylene. By blow molding the obtained three-layer laminate, the medical container (vial) as depicted in Fig. 1 was manufactured.

### (Example 2)

The innermost layer was made of a cyclic polyolefin resin (COC), the gas barrier layer was made of an ethylene-vinyl alcohol copolymer resin (EVOH) and the external layer was made of a cyclic polyolefin resin (COC). These layers were jointed together by the adhesive (adhesive A) obtained by adding styrene elastomer to maleic anhydride modified polypropylene. By blow molding the obtained three-layer laminate, the medical container (vial) as depicted in Fig. 1 was manufactured.

### (Comparative Example 1)

The innermost layer was made of a polypropylene resin (PP), the gas barrier layer was made of an ethylene-vinyl alcohol copolymer resin (EVOH) and the external layer was made of a cyclic polyolefin resin (COP). These layers were jointed together by the adhesive (adhesive A) obtained by adding styrene elastomer to maleic anhydride modified polypropylene. By blow molding the obtained three-layer laminate, the medical container (vial) as depicted in Fig. 1 was manufactured.

### (Comparative Example 2)

The innermost layer was made of a cyclic polyolefin resin (COP), the gas barrier layer was made of an ethylene-vinyl alcohol copolymer resin (EVOH) and the external layer was made of a cyclic polyolefin resin (COP). These layers were jointed together by the adhesive (adhesive B) made of maleic anhydride modified polypropylene (without addition of styrene elastomer). By blow molding the obtained three-layer laminate, the medical container (vial) as depicted in Fig. 1 was manufactured.

### Evaluation

From each of the medical containers respectively manufactured as Examples and Comparative Examples, a test piece was manufactured by cutting out from a portion spaced apart upward by 15 mm or more from the bottom of the obtained container. The rigidity, transparency and heat resistance of the test piece was evaluated. Table 2 sets out the results. In terms of the rigidity, the tensile elastic modulus was measured in accordance with JIS K7161. When the measurement result was 1500 MPa or more, the test piece was rated as "OK," and when the measurement result was less than 1500 MPa, the test piece was rated as "NG." In order to measure the transparency, a test piece having a size of width: 9 mm, length: 40 mm and thickness: 1 mm was manufactured. By soaking the test piece into an ultraviolet absorption spectra measurement cell, the transmittance of the wavelength 450 nm in water was measured. When the transmittance was 70% or more, the test piece was rated as "OK," and when the transmittance was less than 70%, the test piece was rated as "NG." In terms of the heat resistance, the tensile elastic modulus was measured in accordance with JIS K7161. When a change in the elastic modulus after the steam sterilization at 121 °C for 30 minutes was 10% or less, the test piece was rated as "OK." When the change was more than 10% but 20% or less, the test piece was rated as "Fair." When the change was more than 20%, the test piece was rated as "NG."

**[Table 2]**

| | Layer Structure | Rigidity | Transparency | Heat Resistance |
|---|---|---|---|---|
| Example 1 | COP/Adhesive A/EVOH/Adhesive A/COP | OK | OK | OK |
| Example 2 | COC/Adhesive A/EVOH/Adhesive A/COC | OK | OK | Fair |
| Comparative Example 1 | PP/Adhesive A/EVOH/Adhesive A/COP | OK | NG | OK |
| Comparative Example 2 | COP/Adhesive B/EVOH/Adhesive B/COP | OK | OK | NG |

As is apparent from Table 2, the medical containers of Examples 1 and 2, to which the invention was applied, have exhibited the satisfactory performance in terms of all of the rigidity, transparency and heat resistance. On the other hand, the medical container of Comparative Example 1, whose innermost layer was made of a polypropylene resin, has not exhibited the satisfactory transparency. Comparative Example 2, in which the same layer structure as in Example 1 was employed but the adhesive B (i.e., adhesive added with no styrene elastomer) was used, exhibited the insufficient heat resistance.

### DESCRIPTION OF REFERENCE NUMERALS

- 1: Medical container
- 2: Container body
- 3: Neck
- 4: Opening
- 5: Innermost layer
- 6: Gas barrier layer
- 7: External layer
- 8, 9: Adhesive layer

## Claims

1. A medical container formed by blow molding and subjected to steam sterilization, comprising:
an innermost layer made of a cyclic polyolefin resin;
a gas barrier layer located at a position external to the innermost layer and made of a gas barrier resin; and
an adhesive layer jointing at least the gas barrier layer to the innermost layer, wherein
an adhesive used in the adhesive layer contains maleic anhydride modified polypropylene and styrene elastomer.

2. The medical container according to claim 1, comprising an external layer located at a position external to the gas barrier layer and made of a cyclic polyolefin resin, wherein the external layer is layered via the adhesive layer made of the adhesive to form a three layer structure.

3. The medical container according to claim 1 or 2, wherein the gas barrier layer is made of an ethylene-vinyl alcohol copolymer resin.

4. The medical container according to any one of claims 1 to 3, wherein the innermost layer is made of a homopolymer of cyclic polyolefin.
